Europäisches Patentamt

European Patent Office

Office européen des brevets

(19)

(11) Veröffentlichungsnummer: **0 173 954 B1**

(12) **EUROPÄISCHE PATENTSCHRIFT**

(45) Veröffentlichungstag der Patentschrift: **02.01.92**

(21) Anmeldenummer: **85110796.1**

(22) Anmeldetag: **28.08.85**

(51) Int. Cl.⁵: **B60T  8/00**

(54) **Bremskraftregelverfahren.**

(30) Priorität: **07.09.84 DE 3432841**

(43) Veröffentlichungstag der Anmeldung:
**12.03.86 Patentblatt  86/11**

(45) Bekanntmachung des Hinweises auf die
Patenterteilung:
**02.01.92 Patentblatt  92/01**

(84) Benannte Vertragsstaaten:
**DE FR GB IT**

(56) Entgegenhaltungen:
**EP-A- 0 032 435**
**EP-A- 0 111 636**
**WO-A-83/03230**

(73) Patentinhaber: **ROBERT BOSCH GMBH**
**Postfach 50**
**W-7000 Stuttgart 1(DE)**

(72) Erfinder: **Maurer, Franz, Prof. Dr.-Ing.**
**Nebelhornstrasse 5**
**W-8960 Kempten(DE)**
Erfinder: **Engfer, Ortwin**
**Im Geiger 30**
**W-7000 Stuttgart-50(DE)**
Erfinder: **Stumpe, Werner**
**Goerdelerstrasse 10**
**W-7014 Kornwestheim(DE)**

(74) Vertreter: **Kammer, Arno, Dipl.-Ing.**
**ROBERT BOSCH GmbH Zentralabteilung Patente Postfach 50**
**W-7000 Stuttgart 1(DE)**

**Beschreibung**

Die Erfindung betrifft ein Bremskraftregelverfahren mit den Merkmalen des Oberbegriffs des Anspruchs 1.

Diesem entsprechend ist z. B. aus der PCT-Anmeldung mit der Veröffentlichungsnummer 83/03230 ein Bremskraftregelverfahren bekannt, bei dem Achslasten in die Regelung einbezogen sind. Die zur Bremskraftverteilung benötigten Achslasten werden dort durch spezielle Meßwertgeber gemessen.

Aus der EP-A2-111 636 ist ein Verfahren zur Ermittlung des Gewichts eines Fahrzeugs bekannt. Es wird dort z.B. das Antriebsmoment und die Fahrzeugbeschleunigung jeweils an zwei gleichen Zeitpunkten ermittelt und aus diesen Werten das Fahrzeuggewicht ermittelt.

Bei dem erfindungsgemäßen Bremskraftregelverfahren gemäß den Merkmalen des Anspruchs 1 wird auf Meßwertgeber für die Achslasten verzichtet und trotzdem wird eine achslastabhängige Bremsdruckverteilung vorgenommen.

Nähere Einzelheiten des erfindungsgemäßen Verfahrens sowie weitere Vorteile ergeben sich aus der nachfolgenden Beschreibung eines Ausführungsbeispiels anhand der Zeichnung.

Es zeigen:

Fig. 1 ein Ausführungsbeispiel einer Bremsanlage, die zur Durchführung des erfindungsgemäßen Verfahrens ausgestattet ist,

Fig. 2 ein Ausführungsbeispiel für die erfindungsgemäße Ausgestaltung des Steuergerätes,

Fig. 3 ein Diagramm, das die Abhängigkeit der Bremskraft vom Bremsdruck wiedergibt,

Fig. 4 ein Diagramm, das die Abhängigkeit der Fahrzeugverzögerung vom Fahrer vorgegebenen Bremsdruck wiedergibt,

Fig. 5 ein Kennlinienfeld zur Bestimmung der Bremsdrücke an den Bremsen der Vorder- und Hinterachse bei vorgegebener Fahrzeugverzögerung und gegebener Masse.

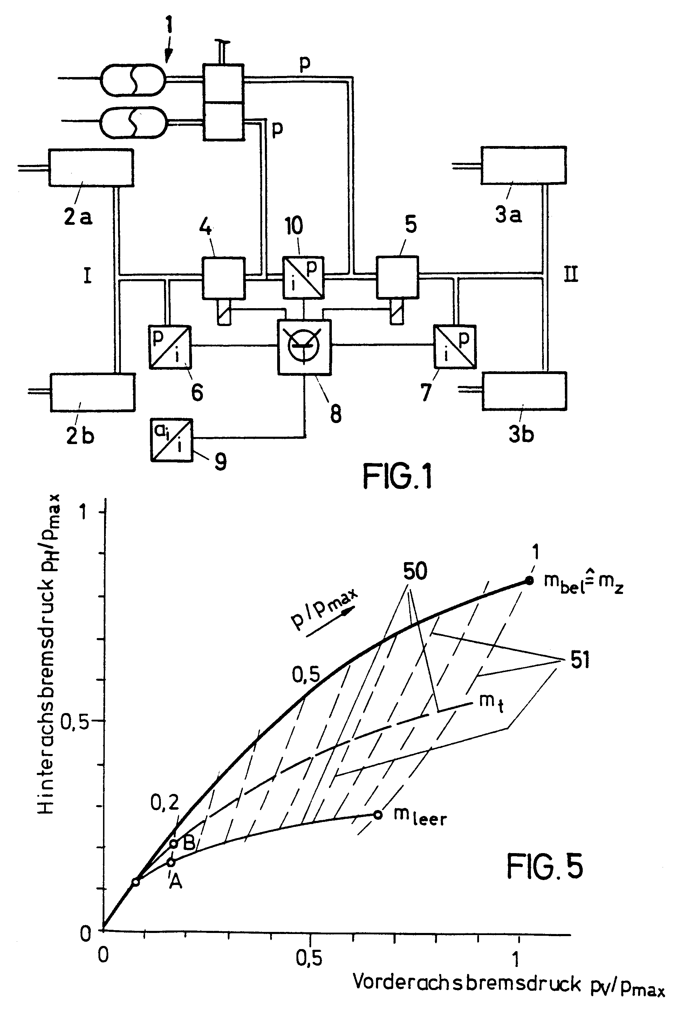

In Fig. 1 ist mit 1 ein vom Fahrer zu bedienender Bremsdruckerzeuger für zwei Bremskreise I und II bezeichnet. In die Druckleitungen zu den zugehörigen Bremszylindern 2a und 2b bzw. 3a und 3b sind elektrisch betätigbare Bremsdrucksteuerventile 4 und 5 z.B. 3/3-Ventile eingeschaltet, mit denen der Druck in den Bremszylindern erhöht, erniedrigt oder konstantgehalten werden kann. Der an den Bremszylindern eingesteuerte Bremsdruck wird in Meßwertgebern 6 und 7 gemessen und die Meßwerte werden an ein elektronisches Steuergerät 8 geliefert. Diesem Steuergerät 8 wird von einem Meßwertgeber 10 auch ein dem vom Fahrer mittels des Bremsdruckerzeugers 1 eingesteuerten Druck p proportionales Signal zugeführt, das der vom Fahrer gewünschten Fahrzeugverzögerung $a_S$ entspricht. Schließlich wird dem Steuergerät 8 auch der Meßwert eines Meßwertgebers 9 zugeführt, der die Fahrzeugverzögerung $a_i$ mißt. Aufgrund der dem Steuergerät 8 zugeführten Signale erzeugt dieses Steuersignale für die Bremsdrucksteuerventile 4 und 5.

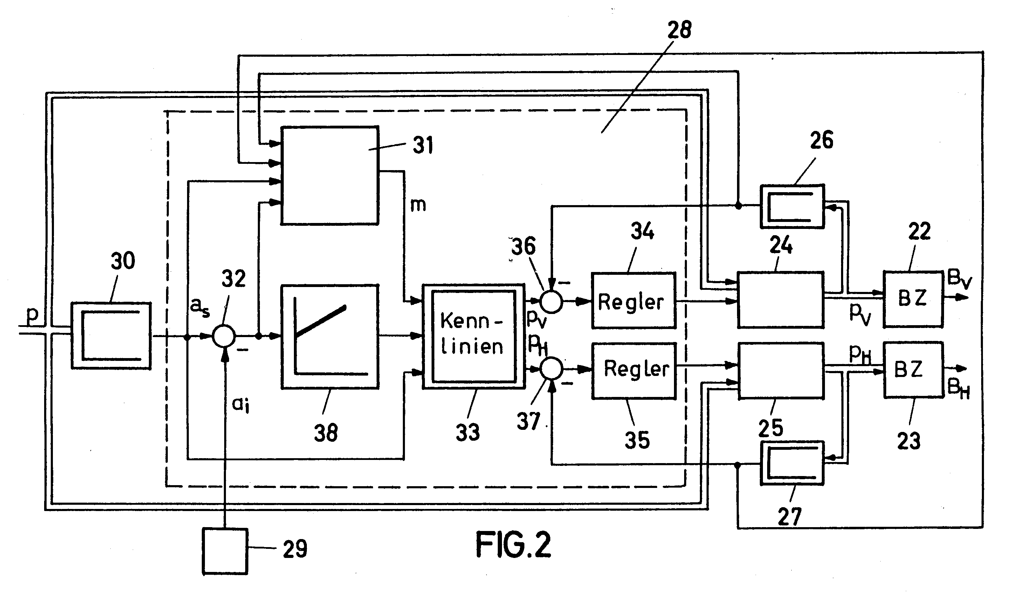

In Fig. 2 der Zeichnung ist von jedem Bremskreis nur jeweils ein Radbremszylinder 22 bzw. 23 dargestellt. Die Bremsdrucksteuerventile sind mit 24 und 25 bezeichnet, die Meßwertgeber für den Vorderachsebremsdruck $p_v$ mit 26 und der für den Hinterachsbremsdruck $P_H$ mit 27. Der Meßwertgeber für den vom Bremsdruckerzeuger 1 eingesteuerten Bremsdruck p trägt das Bezugszeichen 30, der Fahrzeugverzögerungsgeber das Bezugszeichen 29. Der dem Steuergerät-Block 8 der Fig. 1 entsprechende Steuergerät-Block 28 ist in Fig. 2 detailliert dargestellt.

Er enthält einen Rechner 31, dem Signale zugeführt werden, die den an den Radbremszylinders 22 und 23 eingesteuerten Drücken $p_v$ und $p_H$ entsprechen; das dem vom Fahrer eingesteuerten Bremsdruck p und damit der Sollverzögerung $a_s$ entsprechende Signal (aus 30) und das Ausgangssignal eines Vergleichers 32 in dem ein der Differenz $a_s - a_i$ entsprechendes Signal erzeugt wird, wird dem Rechner ebenfalls zugeführt. Dieser Rechner berechnet die bei der augenblicklichen Bremsung vorhandene Fahrzeugmasse m gemäß der Beziehung

$$m = m_Z \frac{(P_V - P_{OV})C_V + (P_H - P_{OH})C_H}{(P - P_{OV})C_V + (p - p_{OH})C_H} \qquad (1)$$

wenn $a_s - a_i$ ungefähr 0 ist. Hierin bedeuten:

$m_z$  eine Bezugsmasse

$p_{OV}$ } die bekannten Drücke vorn und hinten, ab
$p_{OH}$ } denen eine Bremskraft entsteht

$c_V$ } die bekannten und im wesentlichen kon-
$c_H$ } stanten Faktoren, mit denen die Bremskraft in Abhängigkeit vom Bremsdruck ansteigt vorn und hinten

$p_V$ }
$p_H$ } die gemessenen Drücke vorn und hinten

$p$  der vom Bremsdruckerzeuger eingesteuerte
und in 30 gemessene Druck, der der gewünschten Verzögerung entspricht.

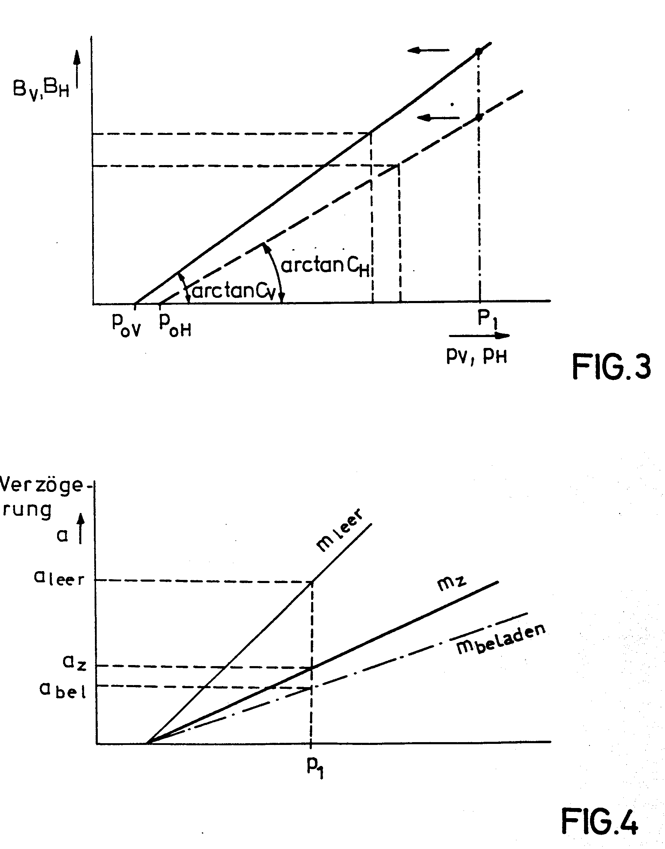

Die Abhängigkeiten der Bremskräfte $B_V$ und $B_H$ von dem Bremsdrücken $P_V$ und $P_H$ für die beiden Achsen sind in Fig. 3 dargestellt.

Die oben erwähnte Bezugsmasse $m_z$ ist entweder die bei der vorhergehenden Messung festgestellte Masse oder bei einer ersten Bremsung nach Fahrzeugstart z. B. die Masse bei dem bekannten Leergewicht oder der bekannten zulässigen Beladung oder eine sonstige vorgegebene Masse, für die sich eine bestimmte festzuschreibende Abhängigkeit zwischen erzeugtem Bremsdruck, gemessenen Bremsdrücken und der Verzögerung ergibt. Vorteilhaft werden die Daten vor dem ersten Fahrzeugstart bestimmt und gespeichert. Die Abhängigkeit der Fahrzeugverzögerung a vom Bremsdruck p zeigt Fig. 4 für verschiedene Beladungszustände. Damit sind alle Größen auf der rechten Seite der Gleichung (1) bekannt und die neue Masse kann errechnet werden, wenn $a_s$-$a_i \approx 0$ ist, was vom Ausgang des Vergleichers 32 gemeldet wird.

Über das Zeitglied 38, z. B. mit PI-Verhalten , wird die Regelabweichung ($a_s$ - $a_i$) dem Kennlinien-Steuergerät 33 zugeführt. Der Rechner 31 liefert ein der ermittelten Masse entsprechendes Signal an ein Kennliniern-Steuergerät 33, in dem ein für das Fahrzeug spezifisches Kennlinienfeld abgespeichert ist. Dieses ist in Fig. 5 dargestellt. Die Kurvenzüge 50 und die dazwischen zu denkenden weiteren Kurvenzüge geben die Zuordnung der Verhältnisse $p_V/p_{max}$ und $p_H/p_{max}$ für verschiedene Beladungszustände ($m_{leer}$, $m_t$ und $m_{bel}$) an, wobei als weiterer Parameter noch das Verhältnis $p/p_{max}$ also die Vorgabe hinzukommt (Kurven 51). Das Kennlinien-Steuergerät 33 gibt zwei Signale ab, die den einzusteuernden Drücken $P_{VS}$ und $P_{HS}$ entsprechen und die über Regelverstärker 34 und 35 den Stellgliedern 24 und 25 zugeführt werden. Die Meßwertgeber 26 und 27 melden die an den Bremsen eingesteuerten Drücke an Vergleicher 36 und 37 zurück, so daß an den Radbremsen solange Druck einsteuert wird bis die am Ausgang des Steuergerätes 33 vorgegebenen Solldrücke erreicht sind.

Die Regelung läuft bei einem Fahrzeug bei dem die Masse schon bestimmt wurde wie folgt ab:
Vom Fahrer wird mittels des Druckgebers 1 ein Druck p vorgegeben, der einer Soll-Verzögerung $a_s$ proportional ist. Zu Bremsbeginn ist $a_i$ = 0, so daß die Meßgröße $a_s$ über das Zeitglied 38 bis zum Kennlinien-Block 33 gelangt. Mit der durch den Rechner vorher ermittelten und gespeicherten Masse $m_t$ wird aus dem gespeicherten Kennlinienfeld im Kennlinien-Steuergerät 33 eine definierte Splittung in $P_{Vs}$ und $P_{Hs}$ vorgenommen. Die Druckregelkreise mit den Regelverstärkern 34 und 35 und den Ventilen 24 und 25 für die Vorder- und Hinterachse stellen die Bremsdrücke in den Bremszylindern 22 und 23 ein. Aus den Bremskräften $B_V$, $B_h$ und der vorhandenen Fahrzeugmasse ergibt sich eine Fahrzeugverzögerung $a_i$ - (Verzögerungsgeber 29), die mit $a_s$ im Vergleicher 32 verglichen wird. Nach erfolgtem Abgleich ($a_s$ - $a_i$ = 0 d. h. Druckänderung bis dieser Abgleich erreicht ist), wird im Rechner 31 mittels der Bremszylinderdrücke $p_V$, $p_H$ und dem $a_s$-Wert, der dem Druck p proportional ist, die vorhandene Fahrzeugmasse überprüft, eventuell korrigiert und abgespeichert. Diese eventuell korrigierte Masse steht für die Druckbestimmung der nächsten Bremsung zur Verfügung. Fahrzeugdaten und die gewünschte Bremsdruckzuordnungsgüte bestimmen die Anzahl der Druckregelkreise. Nicht in jedem Fall muß an allen Achsen geregelt werden.

Wird ein Fahrzeug neu beladen, so ist der Regelablauf wie folgt:

Angenommen ein leeres Fahrzeug wird auf die Masse $m_t$ beladen. Im Rechner 31 ist noch die Masse des leeren Fahrzeugs gespeichert. Wird nun anschließend eine Bremsung des teilbeladenen Fahrzeuges mit der Masse $m_t$ vorgenommen und z.B. vom Fahrer eine Bremswirkung entsprechend $p/p_{max}$ = 0,2 vorgegeben, dann wird vom Kennlinien-Steuergerät 33 eine Verteilung auf $p_V$ und $p_H$ entsprechend der Masse $m_{leer}$ und für $p/p_{max}$ = 0,2 vorgenommen, Diese Situation gibt Punkt A in Fig. 5 wieder. Durch die höhere Fahrzeugmasse ($m_t > m_{leer}$) ist bei der ermittelten Bremsdruckverteilung nach Punkt A die Verzögerung zu klein ($a_{ist} < a_{soll}$). Das Kennlinien-Steuergerät 33 erhöht nun die den Bremsdrücken $p_V$ und $p_H$ entsprechendes Signale aufgrund des vom Zeitglied 38 kommenden Regelabweichung bis bei Punkt B die gewünschte Fahrzeugverzögerung erreicht ist ($a_i = a_s$). Nun ermittelt der Rechner die neue Fahrzeugmasse $m_t$ und speichert sie ab. Die nachfolgenden Bremsungen werden dann von Anfang an mit einer Bremsdruckverteilung entsprechend $m_t$ vorgenommen. Nach dem nächsten Beladungswechsel erfolgt wieder der automatische Abgleich an die neue Fahrzeugmasse entweder von der letzten Fahrzeugmasse aus oder vom Leergewicht ausgehend.

Oben wurde der vom Fahrer eingesteuerte Bremsdruck als Führungsgröße benutzt. Er kann aber auch direkt eine elektrische Größe als Führungsgröße vorgeben.

## Patentansprüche

1. Bremskraftregelverfahren, bei der vom Fahrer beim Bremsen eine bestimmte Sollverzögerung as des Fahrzeugmasse vorgegeben wird und bei dem in Abhängigkeit von dieser Vorgabe und abhängig von der Fahrzeugmasse unterschiedliche Bremsdrücke ($P_V$, $P_H$) an den Bremsen der Fahrzeugachsen derart eingesteuert werden, daß die gewünschte Sollverzögerung $a_s$ erreicht wird, wozu ein Vergleich der vorgegebenen Sollverzögerung $a_s$ mit der vorhandenen Fahrzeugverzögerung $a_i$ durchgeführt wird und wobei die Fahrzeugmasse unter Verwendung der Meßgröße Fahrzeugverzögerung ermittelt wird, dadurch gekennzeichnet, daß mittels einer Bezugsmasse $m_z$ für das Fahrzeug und der vorgegebenen Sollverzögerung $a_s$ in einem abgespeicherten fahrzeugspezifischen Kennlinienfeld (in 33; Fig. 5), das die Bremsdruckverteilung an den Achsen in Abhängigkeit von der vorgegebenen Sollverzögerung $a_s$ und der Fahrzeugmasse $m_t$ beinhaltet, Bremsdrücke $p_V$ und $p_H$ für die Bremsen (2, 3) der beiden Achsen ermittelt und an den Bremsen (2, 3) eingesteuert werden daß bei Abweichen des dabei erzielten Fahrzeugverzögerungswerts $a_i$ vom Sollverzögerungwert $a_s$ die Bremsdrücke $p_V$ und $p_H$ geändert werden, bis diese Fahrzeugverzögerungswerte ($a_s$, $a_i$) etwa gleich sind und daß aus den eingesteuerten Bremsdrücken ($p_V$, $p_H$) und der Sollverzögerung $a_s$ nach dem Abgleich ($a_i \approx a_s$) die Fahrzeugmasse $m_t$ neu bestimmt und als neue Bezugsmasse abgespeichert wird (in 31).

2. Bremskraftregelverfahren nach Anspruch 1, dadurch gekennzeichnet, daß anfangs von der Bezugsmasse ($m_z$) Leergewicht ($m_{leer}$) oder Maximalgewicht $m_{bel}$ des Fahrzeugs ausgegangen wird.

3. Bremskraftregelverfahren nach Anspruch 1 oder 2, dadurch gekennzeichnet, daß die den an den Bremszylindern (22, 23) eingesteuerten Drücke ($p_V$, $p_H$) entsprechenden Signale mit den jeweils zugehörigen über das abgespeicherte Kennlinienfeld ermittelten Bremsdrucksteuersignalen verglichen werden.

4. Bremskraftregelverfahren nach Anspruch 1, dadurch gekennzeichnet, daß das fahrzeugspezifische Kennlinienfeld (in 33) Bremsenkennwerte, Fahrzeugradstand und Schwerpunkthöhen definierter Beladungszustände berücksichtigt.

## Claims

1. Braking force control method in which a certain required vehicle deceleration $a_r$ is specified by the driver when braking and in which different brake pressures $p_F$, $p_R$ are applied to the brakes of the vehicle axles as a function of what is specified by the driver and as a function of the vehicle mass, in such a way that the desired deceleration $a_r$ is achieved, for which purpose, a comparison is made between the specified required deceleration $a_r$ and the actual vehicle deceleration $a_a$, and in which the vehicle mass is determined by using the measurement of vehicle deceleration, characterised in that by means of a vehicle reference mass $m_z$ and the specified required deceleration $a_r$ in a stored vehicle-specific characteristic diagram (in 33; Figure 5), which contains the brake pressure distribution at the axles as a function of the specified required deceleration $a_r$ and the vehicle mass $m_t$, brake pressures $p_F$ and $p_R$ for the brakes (2, 3) of the two axles are determined and applied at the brakes (2, 3), in that in the event of deviation between the vehicle deceleration value $a_a$ thereby achieved and the required deceleration value $a_r$, the brake pressures $p_F$ and $p_R$ are altered until these vehicle deceleration values $(a_r, a_a)$ are approximately equal and in that the vehicle mass $m_t$ is redetermined after the compensation $(a_a \approx a_r)$ from the applied brake pressures $(p_F, p_R)$ and the required deceleration $a_r$ and is stored as the new reference mass (in 31).

2. Braking force control method according to Claim 1, characterised in that the process is initially based on the empty weight $(m_{empty})$ or maximum weight $(m_{laden})$ of the vehicle as the reference mass $(m_z)$.

3. Braking force control method according to Claim 1 or 2, characterised in that the signals corresponding to the pressures $(p_F, p_R)$ applied to the brake cylinders (22, 23) respectively are compared with the associated brake pressure control signals determined by means of the stored characteristic diagram.

4. Braking force control method according to Claim 1, characterised in that the vehicle-specific characteristic diagram (in 33) takes account of brake characteristic values, vehicle wheelbase and loading conditions defined by centre of gravity height.

**Revendications**

1. Procédé de réglage de la puissance des freins selon lequel le conducteur prédétermine une certaine décélération de consigne $(a_s)$ du véhicule pour le freinage et qui, en fonction de cette donnée préalable et de la masse du véhicule, commande des pressions de frein différentes $(P_V/P_H)$ des freins des essieux du véhicule de façon à atteindre la décélération de consigne $(a_s)$ souhaitée, en comparant la décélération de consigne $(a_s)$ prédéterminée à la décélération réelle $(a_i)$ du véhicule el en déterminant la masse du véhicule à l'aide des grandeurs mesurées de la décélération du véhicule, procédé caractérisé en ce qu'à l'aide d'une masse de référence $(m_z)$ du véhicule et de la décélération de consigne $(a_s)$, prédéterminée, dans un champ de courbes caractéristiques spécifique au véhicule, mis en mémoire (dans le bloc 33, figure 5) comportant la répartition de la pression de frein sur les essieux en fonction de la décélération de consigne $(a_s)$, prédéterminée et de la masse $(m_t)$ du véhicule, on définit de pressions de frein $(P_V$ et $P_H)$ pour les freins (2, 3) des deux essieux et on commande les freins (2, 3) pour qu'en cas de différence entre la valeur de décélération obtenue $(a_i)$ et la valeur de consigne de la décélération $(a_s)$, on modifie les pressions de frein $(P_V$ et $P_H)$ jusqu'à ce que ces valeurs de décélération du véhicule $(a_s, a_i)$ soient sensiblement égales et à partir des pressions de frein ainsi commandées $(P_V, P_H)$ et de la décélération de consigne $(a_s)$, après avoir atteint l'équilibre $(a_i \approx a_s)$, on détermine de nouveau la masse $(m_t)$ du véhicule et on inscrit cette valeur comme nouvelle masse de référence (dans le bloc 31).

2. Procédé de réglage de la puissance de frein caractérisé en ce qu'initialement, on part de la masse de référence $(m_z)$, du poids à vide $(m_{vide})$ ou du poids maximum $(m_{chargé})$, du véhicule.

3. Procédé de réglage de la puissance de freinage selon la revendication 1 ou 2, caractérisé en ce que les signaux correspondant aux pressions $(P_V, P_H)$ commandées sur les cylindres de frein (22, 23) dont comparés aux signaux de commande de pression de frein correspondants déterminés à partir du champ de courbes caractéristiques inscrit en mémoire.

4. Procédé de réglage de la puissance de freinage selon la revendication 1, caractérisé en ce que le champ de courbes caractéristiques spécifique au véhicule (dans le bloc 33) tient compte des valeurs caractéristiques des freins, de l'état des roues du véhicule et de la hauteur du centre de gravité défini par l'état de chargement.

FIG.1

FIG.5

FIG.2

EP 0 173 954 B1

FIG.3

FIG.4